**Europäisches Patentamt**

**European Patent Office**

**Office européen des brevets**

(11) Publication number: **0 127 253**
**B1**

## (12) EUROPEAN PATENT SPECIFICATION

(45) Date of publication of patent specification: **07.01.88**

(51) Int. Cl.⁴: **C 08 F 6/26** // (C08F6/26, 218:02)

(21) Application number: **84300931.7**

(22) Date of filing: **14.02.84**

(54) Process for removal of residual monomers from ethylene copolymers.

<table>
<tr>
<td>

(30) Priority: **29.04.83 US 489874**

(43) Date of publication of application:
**05.12.84 Bulletin 84/49**

(45) Publication of the grant of the patent:
**07.01.88 Bulletin 88/01**

(84) Designated Contracting States:
**BE DE FR GB IT NL SE**

(56) References cited:
**EP-A-0 022 386**
**EP-A-0 068 146**

</td>
<td>

(73) Proprietor: **MOBIL OIL CORPORATION**
**150 East 42nd Street**
**New York New York 10017 (US)**

(72) Inventor: **Hagerty, Robert Olds**
**328 Horizon Drive**
**Edison New Jersey 08817 (US)**

(74) Representative: **Cooper, John Anthony et al**
**Mobil Court 3 Clements Inn**
**London WC2A 2EB (GB)**

</td>
</tr>
</table>

Courier Press, Leamington Spa, England.

**0 127 253**

**Description**

This invention relates to a process for removal of residual monomers from ethylene copolymers.

Polymerization of monomers generally results in a polymer containing residual monomers which must be removed for economic reasons, to meet quality standards, or to satisfy regulatory requirements. In the copolymerization of ethylene and higher olefins resulting in so-called "linear low density polyethylene" residual monomers remain and can be removed by sweeping the copolymer with an inert gas such as nitrogen. Such a process is described in, for example U.S. Patent 4,372,758. If it is desired to recycle the monomers to the polymerization reactors, the monomers must first be separated from the inert gas.

EP—A—68,146 teaches removal of residual monomer from a solid copolymer based on ethylene by stripping with a stripping gas which can be an alkane or alkene, a chloro- or fluoromethane or ethane and carbon monoxide. The stripping deodorizes the copolymer. An object of the present invention is to eliminate the use of inert gas, and the need for its separation, in the efficient removal of residual monomers from ethylene copolymers.

Accordingly, the invention resides in a process for removing residual monomer from a solid copolymer of ethylene prepared by the gas phase polymerization in a polymerization zone above atmospheric pressure of a reactor gas which includes ethylene and at least one higher olefin monomer, comprising subjecting said solid copolymer to a reduced pressure zone sufficient to desorb said higher olefin monomer, sweeping said copolymer with reactor gas or a component thereof which is substantially free of inert gases and recycling the resulting gas containing desorbed higher olefin to said polymerization zone.

The present process is particularly applicable to the removal of residual monomers from copolymers of ethylene and higher olefins prepared in the gas phase. Higher olefins containing 4 to 6 carbon atoms are particularly suitable for gas phase reaction. The method of preparation of ethylene copolymers in a gas phase fluid bed reactor is described in U.S. Patent 4,011,382. In particular, suitable comonomers are the olefins containing 3 to 6 carbon atoms such as propylene, 1-butene, 1-pentene, 1-hexene, and 4-methyl-1-pentene. These monomers may be present as the sole comonomer with ethylene or two or more of the higher olefins can be copolymerized with ethylene. The present process is particularly advantageous in the removal of hexene monomer from copolymers of ethylene and hexene.

The polymerization of ethylene and higher olefins in the gas phase is generally conducted at pressures of 150 to 350 psi (10.3 to 24.1 bar), preferably 250 to 350 psi (17.2 to 24.1 bar). In order to remove residual monomer from the copolymer, the copolymer is subjected to a reduced pressure zone at a pressure sufficient to desorb the higher olefin monomer substantially. The pressure in the reduced pressure zone is generally a factor of 0.2 or less than the pressure in the polymerization zone and more preferably a factor of 0.15 to 0.075 of the polymerization pressure. For example, where the pressure in the polymerization reactor is 315 psia (21.8 bar) the pressure in the reduced pressure zone is about 32 psia (2.2 bar) or a factor of about 0.1 of the pressure in the polymerization zone.

A small flow of reactor gas is used to sweep the desorbed monomers from the copolymer to prevent an accumulation of heavy monomers that would act to reduce efficiency. The sweep gas is recycled to the reactor along with the desorbed monomers. It is not necessary that the sweep gas contain the same constituents as the reactor gas fed to the polymerization reactor. Sweep gas may contain any one of the constituents of the reactor gas in the absence of the other constituents. For example the sweep gas can comprise ethylene alone or hydrogen which is commonly fed to the reactor. However, the sweep gas is substantially free of added inert gases such as nitrogen. Thus, where the reactor gas itself contains inert gas such as nitrogen, the addition of more inert gas to the sweep gas should be avoided to prevent the buildup of undesired amounts of inert gas in the reactor.

Generally, the equilibrium solubility of the monomer in the copolymer is reduced in the low pressure zone to about 1/10th of its initial value allowing 90 percent desorption to occur. The 90 percent recovery level is a practical limit which avoids unacceptably high levels of heavy inerts in the reactor, which are recovered along with the monomers. Sufficient residence time in the low pressure zone must be provided for desorption. For example, with hexene, approximately 20 minutes is required to reach a desirable 85—90 percent desorption.

The invention is illustrated by the following Examples.

Example 1

The computer simulation of the overall production process was carried out to investigate effects on the reactor with dissolved gas recovery. The simulation is based on a 90 percent recovery of monomer in the production of a terpolymer resin of ethylene, propylene, and hexene, having a density of about 0.918. The monomer efficiency listed in Table 1 (weight units of monomer consumed per weight unit of monomer incorporated into the product) were determined. The overall efficiency is a weighted average of the separate monomer efficiencies.

2

**0 127 253**

TABLE 1

| | Monomer efficiency | |
|---|---|---|
| | Without recovery | With recovery |
| Ethylene | 1.0109 | 1.0035 |
| Propylene | 1.1884 | 1.0556 |
| Hexene | 1.4378 | 1.1337 |
| Overall | 1.0413 | 1.0127 |

Example 2

In a similar manner the computer simulation was made based on a 90 percent recovery figure and the production of a copolymer of ethylene and butene-1 having a density of 0.918. The monomer efficiencies are listed in Table 2.

TABLE 2

| | Monomer efficiency | |
|---|---|---|
| | Without recovery | With recovery |
| Ethylene | 1.0105 | 1.0040 |
| Butene | 1.2858 | 1.0760 |
| Overall | 1.0342 | 1.0102 |

**Claims**

1. A process for removing residual monomer from a solid copolymer of ethylene prepared by the gas phase polymerization in a polymerization zone above atmospheric pressure of a reactor gas which includes ethylene and at least one higher olefin monomer, comprising subjecting said solid copolymer to a reduced pressure zone sufficient to desorb said higher olefin monomer, sweeping said copolymer with reactor gas or a component of the reactor gas which is substantially free of inert gases and recycling the resulting gas containing desorbed higher olefin to said polymerization zone.

2. The process of claim 1 in which said polymerization is conducted at a pressure of 10.3 to 24.1 bar (150 to 350 psi) and said reduced pressure zone is maintained at a pressure which is a factor of 0.2 or less of the polymerization pressure.

3. The process of claim 1 in which said polymerization is conducted at a pressure of 17.2 to 24.1 bar (250 to 350 psi) and said reduced pressure zone is maintained at a pressure which is a factor of 0.15 to 0.075 of the polymerization pressure.

4. The process of any preceding claim 1 in which said higher olefin contains at least 5 carbon atoms.

5. The process of claim 4 in which said higher olefin contains 6 carbon atoms.

6. The process of claim 5 in which said higher olefin is 1-hexene.

**Patentansprüche**

1. Verfahren zur Entfernung zurückbleibender Monomere aus einem festen Äthylencopolymer, das durch Gasphasenpolymerisation in einer Polymerisafionszone oberhalb des atmosphärischen Druckes des Reaktorgases hergestellt wurde, das Äthylen und zumindest ein höheres Olefinmonomer einschließt, bei dem das feste Copolymer einer Zone reduzierten Druckes unterzogen wird, der ausreichend ist, um das höhere Olefinmonomer zu desorbieren, das Copolymer mit dem Reaktorgas oder einer Komponente des Reaktorgases mitgerissen wird, das im wesentlichen frei von Inertgasen ist und das resultierende Gas, das das desorbierte höhere Olefin enthält, im Kreislauf zur Polymerisationszone zurückgeführt wird.

2. Verfahren nach Anspruch 1 worin die Polymerisation bei einem Druck von 10,3 bis 24,1 bar (150 bis 350 psi) durchgeführt wird und die Zone reduzierten Druckes bei einem Druck gehalten wird, der einen Faktor von 0,2 oder weniger des Polymerisationsdruckes darstellt.

3. Verfahren nach Anspruch 1, worin die Polymerisation bei einem Druck von 17,2 bis 24,1 bar (250 bis

3

**0 127 253**

350 psi) durchgeführt wird und die Zone reduzierten Druckes bei einem Druck gehalten wird, der einen Faktor von 0,15 bis 0,075 des Polymerisationsdruckes darstellt.

4. Verfahren nach einem der vorstehenden Ansprüche, worin das höhere Olefin mindestens 5 Kohlenstoffatome enhtält.

5. Verfahren nach Anspruch 4 worin das höhere Olefin 6 Kohlenstoffatome enthält.

6. Verfahren nach Anspruch 5, worin das höhere Olefin 1-Hexen ist.

**Revendications**

1. Un procédé pour éliminer les monomères résiduels contenus dans un copolymère solide de l'éthylène préparé par polymérisation en phase gazeuse, dans une zone de polymérisation à pression supérieure à la pression atmosphérique, d'un gaz de réaction comprenant de l'éthylène et au moins une oléfine supérieure monomère, ce procédé consistant à faire passer le copolymère solide dans une zone dont la pression a été réduite dans une mesure suffisante pour provoquer la désorption de l'oléfine supérieure monomère, à balayer ce copolymère par le gaz de réaction ou un composant du gaz de réaction pratiquement exémpt de gaz inertes et à recycler les gaz obtenus, contenant l'oléfine supérieure désorbée, vers la zone de polymérisation.

2. Le procédé selon la revendication 1, dans lequel la polymérisation est effectuée à une pression de 10,3 à 24,1 bar et la zone à pression réduite est maintenue à une pression représentant 0,2 fois ou moins la pression de polymérisation.

3. Le procédé de la revendication 1, dans lequel la polymérisation est effectuée à une pression de 17,2 à 24,1 bar et la zone à pression réduite est maintenue à une pression représentant 0,15 à 0,075 fois la pression de polymérisation.

4. Le procédé selon l'une quelconque des revendications précédentes, dans lequel l'oléfine supérieure contient au moins 5 atomes de carbone.

5. Le procédé selon la revendication 4, dans lequel l'oléfine supérieure contient 6 atomes de carbone.

6. Le procédé selon la revendication 5, dans lequel l'oléfine supérieure est le 1-hexène.

4